# EUROPEAN PATENT APPLICATION

(11) **EP 3 763 599 A1**
(43) Date of publication of application: **13.01.2021**
(21) Application number: 18908894.1
(22) Date of filing: 18.10.2018
(51) Int. Cl.: B62B 7/06

(54) **COLLAPSING MECHANISM FOR BABY PUSHCHAIRS**

(30) Priority: 09.03.2018 ES 201830324 U
(71) Applicant: LIL ONES S.L., 08769 Barcelona (ES)
(72) Inventor: ALCANTUD GUERRERO, Joan, 08912 Barcelona (ES)
(74) Representative: Espiell Gomez, Ignacio
(86) International application number: PCT/ES2018/070681
(87) International publication number: WO 2019/170933

(57) **Abstract**

The present invention relates to a collapsing mechanism for baby pushchairs which exhibits in the articulated joints (1) between the bars of the handlebar (2) and the bars of the seat frame (3, 4), the fixing, also articulated, of the ends of the bumper bar or bars (5) of the seat, allowing the joint folding thereof with the bars of the handlebar (2) and of the seat frame (3, 4) without removing it and all the bars (2, 3, 4) remaining parallel.

## Description

### OBJECT OF THE INVENTION

The invention, as stated in the title of the present specification, relates to a collapsing mechanism for baby pushchairs which contributes, to its intended use, advantages and features, which are described in detail further on, which imply an improvement in the current state of the art.

The object of the present invention lies, specifically, in the folding mechanism of a pushchair which concerns the articulated joints of the tubular structure thereof between the bars of the handlebar and the bars of the seat frame, and which are one of the essential points that enable said structure to be folded from a use position to the folded position thereof, the mechanism of which, in an innovative way, envisages the articulated incorporation of the end fixings of the bumper bar of the seat in said joints to allow the joint folding of such bumper bar without the need to remove it to achieve said folding.

### FIELD OF APPLICATION OF THE INVENTION

The field of application of the present invention is framed within the sector of the industry dedicated to the manufacture of pushchairs, focusing particularly on the field of their folding structures.

### BACKGROUND OF THE INVENTION

Currently, pushchairs cannot be folded with the bar that is placed in front of children to prevent them from jumping out of the pushchair, known as security bar, safety bar or bumper bar, when it is arranged in the use position thereof, so it is necessary to remove it before folding the pushchair.

However, removing said bar to fold the pushchair requires a lot of time that, in many cases, does not exist when the father or mother is with the child.

In addition, removing the bar from the pushchair and storing it independently of it causes, on many occasions, for the bar to be lost.

For this reason, the bumper bar is generally fixed to the pushchair structure by means of respective articulated joints, expressly provided to that effect, which are coupled to both sides of the pushchair, either to the bars of the upper portion which form the handlebar or to the bars at the lower portion which make up the frame of the seat.

The problem is that, as said bumper bar is attached to said bars of the handlebar or of the seat frame, when the pushchair is folded, it moves jointly with the bars to which it is attached, a fact that prevents the structure from closing correctly as said bumper bar and/or the attachments thereof collide with other portions of the pushchair structure, especially when the pushchair exhibits a folding mechanism for the structure with articulated joints between the lower ends of the bars of the handlebar and the upper ends of the bars of the seat frame, as is the case of the mechanism concerned herein.

Specifically, in each of the aforementioned articulated joints of the structure that allow folding between the bars that form the handlebar and the bars that make up the seat frame, currently, there are usually at least two parts which, with an approximately disc shape, rotate concentrically with each other, one which is integrally attached to the lower end of the bar of the handlebar and the other which is integrally attached to the upper end of the bar of the seat frame, usually the one that is in the front portion and ends in the front wheels, optionally being able to include another portion in the shape of a disc that also rotates in the same articulated joint and that is integrally attached to the upper end of a second bar of the seat frame, in this case the one which ends inferiorly in the rear wheels; in any case, bars which, when folded, tend to be placed in an almost parallel manner, while in their use position, with the pushchair unfolded, said bars, that of the handlebar and that of the frame that ends in the front wheels, are arranged aligned one behind the other, and that which ends in the rear wheels is arranged perpendicular to them, existing, in individual pushchairs, two such articulated joints, one on each side of the pushchair, and in the pushchairs for twins or double ones, wherein the structure comprises two seats in parallel with two bumper bars, three articulated joints, one on each side and one in the centre between both seats.

The objective of the present invention is to take advantage of said mechanism with said type of articulated joints between the bars of the upper portion and the lower portion of the pushchair structure that determine the folding thereof, to fix the bumper bar or bars and achieve, mainly, a better folding of the assembly without the need to disassemble said bumper bar, but also, eliminating an element in the manufacture of the structure, which has an advantageous effect on the reduction of the economic cost thereof.

Moreover, as a reference to the current state of the art, it should be noted that although multiple types of folding mechanisms for pushchairs are known, at least the applicant is unaware of the existence of any other invention of similar application which has technical and structural features equal or similar to those had by the one claimed herein.

### DESCRIPTION OF THE INVENTION

The collapsing mechanism for baby pushchairs proposed by the invention is therefore configured as a notable novelty within its field of application, since as it is implemented, the aforementioned objectives are satisfactorily achieved, the characterising details that make it possible and distinguish it being conveniently included in the final claims accompanying this description.

What the invention proposes, as indicated above, is a folding mechanism for the structure of a pushchair which, comprising articulated joints between the bars of the handlebar and the bars of the seat frame, wherein said structure bends to move from a use position to the folded position thereof, is distinguished by envisaging the articulated incorporation of the fixings of the ends of the bumper bar of the seat in said articulated joints allowing the joint folding of said bumper bar with the bars of the handlebar and the seat frame without the need to remove it for all to remain essentially parallel.

For this, and more specifically, each one of the aforementioned articulated joints of the pushchair structure, which in individual pushchairs are two, one on each side of the seat, and in pushchairs for twins or double pushchairs are three, one on each side and one in the center between both seats, the two or three parts with an approximately disc shape, which rotate concentrically, one integrally attached to the lower end of the bar of the handlebar, and the others integrally attached to the upper end of the bar of the front seat frame, which ends inferiorly in the front wheels, and, where appropriate, to the upper end of the bar of the rear seat frame, which ends inferiorly in the rear wheels, are coupled, also in an articulated way with concentric rotation movement, to respective additional disc-shaped parts which, in turn, are integrally attached to the ends of the bumper bar, enabling the joint movement of said bumper bar with the folding movement of the bars of the handlebar and the bars of the seat frame.

Furthermore, in the preferred embodiment, said additional circular parts exhibit an idle or "free" rotation movement with respect to the rest of the rotating parts of the articulated joint, when it moves during the folding operation, to facilitate the positioning of said bumper bar between the bars of the handlebar and of the frame in the folded position.

To block such movement of the bumper bar in the use position, the ends of the same exhibit respective coupling extensions which are inserted into recesses provided to that effect on the external face of the aforementioned additional circular parts.

The described collapsing mechanism for baby pushchairs therefore consists of an innovative structure with features heretofore unknown for its intended purpose, reasons which, taken together with its usefulness, provide it with sufficient grounds for obtaining the requested exclusivity privilege.

### DESCRIPTION OF THE DRAWINGS

To complete the description provided herein, and for the purpose of helping to make the features of the invention more readily understandable, this description is accompanied by a set of drawings constituting an integral part of the same, which by way of illustration and not limitation represents the following:
Figure number 1 shows a schematic perspective view of a portion of the structure of a pushchair in which the essential elements thereof are included and which make up the folding mechanism for pushchairs, object of the invention, specifically an example for an individual pushchair, showing the main parts thereof;
Figure number 2 shows a schematic cross-sectional elevation view, of another example of a portion of the pushchair structure with the folding mechanism according to the invention, in this case an example of a double pushchair, showing the parts and elements it comprises;
Figure number 3 shows a schematic perspective view of a portion of the structure of a double pushchair, which includes the essential elements thereof and which make up the folding mechanism for pushchairs, showing the main parts thereof.

### PREFERRED EMBODIMENT OF THE INVENTION

In view of the aforementioned figures, and in accordance with the numbering adopted, one may observe therein two non-limiting exemplary embodiments of the collapsing mechanism for baby pushchairs of the invention, which comprises the parts and elements indicated and described in detail below.

Thus, as can be seen in said figures, the mechanism of the invention comprises, in a known manner, two or three articulated joints (1), between the bars of the handlebar (2) and the bars of the seat frame (3, 4), whereby the pushchair structure is folded to go from a use position to a folded position wherein said bars (2, 3, 4) remain parallel to each other, and is distinguished by incorporating, in the articulated joints themselves (1), the fixing, also articulated, of the ends of the bumper bar (5) of the seat allowing the joint folding thereof with the bars of the handlebar (2) and of the seat frame (3, 4) without the need to remove it for all to be equally in parallel.

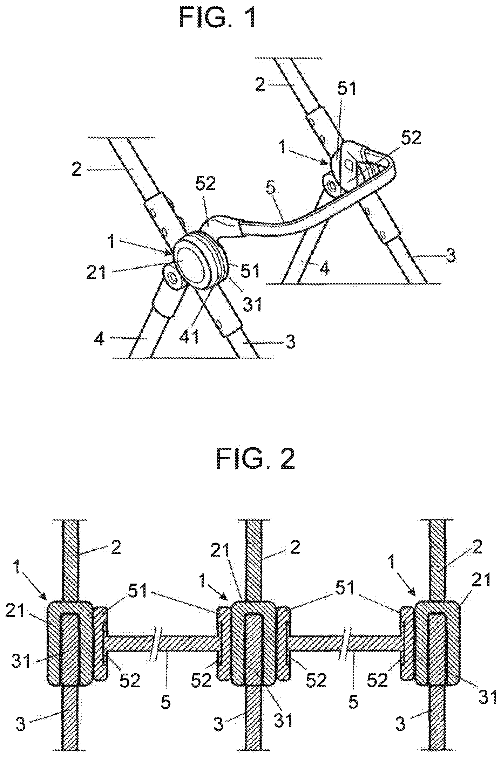

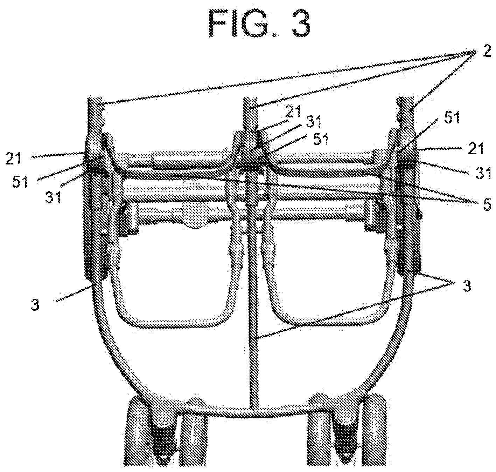

Thus, when the pushchair is individual and the structure comprises a frame of a single seat, the mechanism comprises a single bumper bar (5) attached at the ends thereof to the only two articulated joints (1) of the mechanism, as shown in the representation of Figure 1, while, when the pushchair is for twins and the structure comprises a frame with two laterally attached seats, the mechanism comprises two bumper bars (5) which are located opposite each seat and are attached at the respective ends thereof to the three articulated joints (1) of said mechanism, one central and two at the ends, the articulated joints (1) of the ends receiving the fixing of one of the ends of each bumper bar (5) and the central articulated joint receiving the fixing of two ends of bumper bars (5), one for each side of each bumper bar (5), as shown in the diagram in Figure 2.

For this, each articulated joint (1), in addition to the two or three concentric rotation circular parts (21, 31, 41) that it comprises, consisting of a first part (21) integrally attached to the lower end of the bar of the handlebar (2), a second part (31) integrally attached to the upper end of the front bar of the seat frame (3) and, preferably, a third part (41) integrally attached to the upper end of the rear bar of the seat frame (4), further incorporates, an additional circular part (51), equally coupled with the possibility of concentric rotation movement, which in this case is integrally attached to the end of the bumper bar (5), enabling the joint movement of said bar (5) with the folding movement of the bars of the handlebar (2) and of the bar or bars of the seat frame (3, 4).

Furthermore, preferably, said additional circular part (51) exhibits an idle or "free" rotation movement with respect to the rest of the rotating parts of the articulated joint (1), when these uncouple to rotate in the folding operation.

Finally, preferably, each end of the bumper bar (5) exhibits an extension (52) that couples to a complementary recess of the additional circular part (51) to block the movement thereof in the use position.

Having sufficiently described the nature of the present invention, as well as the ways of implementing it, it is not considered necessary to expand its explanation for any expert in the state of the art to understand its scope and the advantages which derive from it.
Likewise, it must be noted that, within its essential nature, the invention may be carried out according to other embodiments differing in detail from that set out by way of example, which the protection sought would equally cover, provided that the fundamental principle thereof is not altered, changed or modified.

## Claims

1. A collapsing mechanism for baby pushchairs which, comprising articulated joints (1) between the bars of the handlebar (2) and the bars of the seat frame (3, 4), for example with two or three concentric rotation circular parts (21, 31, 41), consisting of a first part (21) integrally attached to the lower end of the bar of the handlebar (2), a second part (31) integrally attached to the upper end of the front bar of the seat frame (3) and, where appropriate, a third part (41) integrally attached to the upper end of the rear bar of the seat frame (4), to fold the pushchair structure from the use position thereof to a folded position wherein said bars (2, 3, 4) remain parallel to each other, and said structure contemplating one or two bumper bars (5) opposite the frame of the pushchair or pushchairs, depending on whether the pushchair is individual or for twins, is **characterised in that** it exhibits, in the articulated joints (1) themselves, the fixing, also articulated, of the ends of the bumper bar or bars (5) of the seat, allowing the joint folding thereof with the bars of the handlebar (2) and of the seat frame (3, 4) without removing it and all the bars (2, 3, 4) remaining parallel.

2. The folding mechanism for pushchairs, according to claim 1, **characterised in that**, when the pushchair is individual and the structure comprises a single seat frame, the mechanism comprises a single bumper bar (5) attached at the ends thereof to the only two articulated joints (1) of the mechanism.

3. The folding mechanism for pushchairs, according to claim 1, **characterised in that**, when the pushchair is for twins and the structure comprises a frame with two laterally attached seats, the mechanism comprises two bumper bars (5) which are located opposite each seat and are attached at the respective ends thereof to the three articulated joints (1) of said mechanism, one central and two at the ends, the articulated joints (1) of the ends receiving the fixing of one of the ends of each bumper bar (5) and the central articulated joint receiving the fixing of two ends of bumper bars (5), one for each side of each bumper bar (5).

4. The folding mechanism for pushchairs, according to claims 1 to 3, **characterised in that**, when each articulated joint (1) comprises two or three concentric rotation circular parts (21, 31, 41), consisting of a first part (21) integrally attached to the lower end of the bar of the handlebar (2), a second part (31) integrally attached to the upper end of the front bar of the seat frame (3) and, where appropriate, a third part (41) integrally attached to the upper end of the rear bar of the seat frame (4), further incorporating, an additional circular part (51), equally coupled with the possibility of concentric rotation movement, which is integrally attached to the end of the bumper bar (5), enabling the joint movement of said bar (5) with the folding movement of the bars of the handlebar (2) and of the bar or bars of the seat frame (3, 4).

5. The folding mechanism for pushchairs, according to claim 4, **characterised in that** the additional circular part (51) that is integrally attached to the end of the bumper bar (5) has idle or "free" rotation with respect to the rest of rotating pieces of the articulated joint (1), when these uncouple to rotate in the folding operation.

6. The folding mechanism for pushchairs, according to claim 5, **characterised in that** each end of the bumper bar (5) exhibits an extension (52) that couples to a complementary recess of the additional circular part (51) to block the movement thereof in the use position.
